# EUROPÄISCHE PATENTANMELDUNG

(11) **EP 0 599 032 A1**
(43) Veröffentlichungstag der Anmeldung: **01.06.1994**
(21) Anmeldenummer: 93116035.2
(22) Anmeldetag: 05.10.1993
(51) Int. Cl.: B65G 1/02

(54) **Behälterlager**

(30) Priorität: 23.11.1992 CH 3586/92
(71) Anmelder: Manitec Consulting AG, CH-6032 Emmen (CH)
(72) Erfinder: Koller, Hans, CH-6048 Horw (CH); Mathys, André, CH-6372 Ennetmoos (CH)
(74) Vertreter: Fillinger, Peter, Dr.

(57) **Zusammenfassung**

Das Behälterlager weist mindestens ein Paar von sich mit Abstand spiegelsymmetrisch gegenüberliegenden, vertikalen und mit Lagerplätzen (2, 2') versehenen Reihen (1, 1') auf, welche Reihen (1, 1') an ihren vier Ecken durch Regalstützen (3) begrenzt sind. Um das Behälterlager preisgünstig, leistungsfähig und unterschiedlichen Bedürfnissen anpassbar zu gestalten, wird vorgeschlagen, dass im Zwischenraum zwischen den Reihen (1, 1') ein vertikal verfahrbarer Lift (4) mit einer Beschickungs- und Entnahmeeinrichtung (8) vorhanen und wenigstens an zwei zu gegenüberliegenden Seiten des Zwischenraumes befindlichen Regalstützen (3) geführt ist.

## Beschreibung

Die vorliegende Erfindung bezieht sich auf ein Behälterlager gemäss dem Oberbegriff des Anspruchs 1.

Der Handel mit Kleinteilen wird zunehmend dadurch beeinflusst, dass der Verbraucher seine Lagerhaltung so stark wie möglich reduziert und nur im Bedarfsfall jeweils ein benötigtes Kleinteil bestellt. Für den Kleinteillieferant hat dies zur Folge, dass anstatt wenig grosser Bestellungen eine Vielzahl kleiner Bestellungen zu bearbeiten sind. Damit wird der mit der Bestellungsbearbeitung verbundene Aufwand im Verhältnis zum Warenwert unverhältnismässig gross, sodass Kleinbestellungen unter Konkurrenzdruck nicht gewinnbringend abgewickelt werden können.

Die vorliegende Erfindung stellt sich daher die Aufgabe, ein Behälterlager zu schaffen, das preisgünstig, leistungsfähig und unterschiedlichen Bedürfnissen anpassbar ist und das zudem vollautomatisierbar ist.

Erfindungsgemäss wird diese Aufgabe gelöst durch die kennzeichnenden Merkmale des Anspruchs 1.

Eine weitere Aufgabe der Erfindung ist es, ein Behälterlager mit Regalstützen aus handelsüblichen Profilen möglichst gleichen Querschnitts zu schaffen, um Anschaffungs-, Lagerhaltungs- und Transportkosten sowie Mengenrabatte zu optimieren. Erfindungsgemäss wird diese Aufgabe gelöst durch einen Bauteilsatz gemäss Anspruch 4.

Anhand der beiliegenden schematischen Zeichnung wird die Erfindung beispielsweise erläutert. Es zeigen:
- Fig. 1: ein Ausschnitt aus einem Regallager in perspektivischer Darstellung,
- Fig. 2: eine Ansicht des Bedienungslifts für die Regalplätze von unten gesehen,
- Fig. 3: eine gleiche Ansicht wie Fig. 2 eines Bedienungslifts mit zwei Bedienungsplätzen,
- Fig. 4: einen Ausschnitt aus einer Seitenansicht einer Flachprofilstange
- Fig. 5: einen Schnitt längs der Linie V-V in Fig. 4.
- Fig. 6: eine Variante des Beispiels nach Fig. 3 und
- Fig. 7: eine perspektivische Ansicht eines Behälterlagers gemäss den Fig. 3 und 6

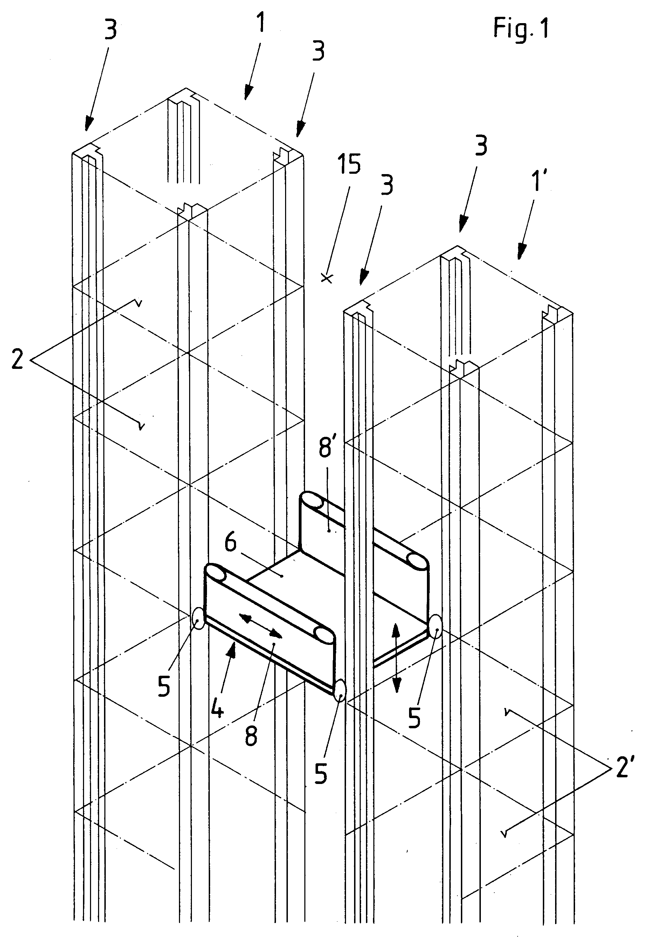

Bei dem in Fig. 1 gezeigten Regallager handelt es sich um ein modulares Behälterlager mit zwei distanzierten Reihen 1, 1' vertikaler Lagerplätze 2, 2', welche strichpunktiert angedeutet sind. Jede der vertikalen Reihen 1, 1' ist an ihren vier Ecken durch eine Regalstütze 3 begrenzt, die gegenseitig durch nicht dargestellte Mittel verstrebt sind. Die auf gleicher Höhe liegenden Lagerplätze 2, 2' sind einander mit ihrer Beschickungs- bzw. Entnahmeseite zugewandt und koachsial fluchtend ausgerichtet. Die Beschickungs- und Entnahmeseite einer Seite 1, 1' brauchen indessen nicht notwendigerweise zusammenzufallen sondern können sich auch auf den einander abgewandten Seiten befinden.

Im Zwischenraum zwischen den beiden Reihen 1, 1' ist ein vertikal verschiebbarer Lift 4 angeordnet, der mit nicht dargestellten Mitteln heb- und senkbar ist. Der Lift 4 ist durch mit den Regalstützen 3 zusammenwirkende Rollen 5 gegen eine horizontale Querverschiebung gesichert und gleichzeitig für die Vertikalbewegung geführt.

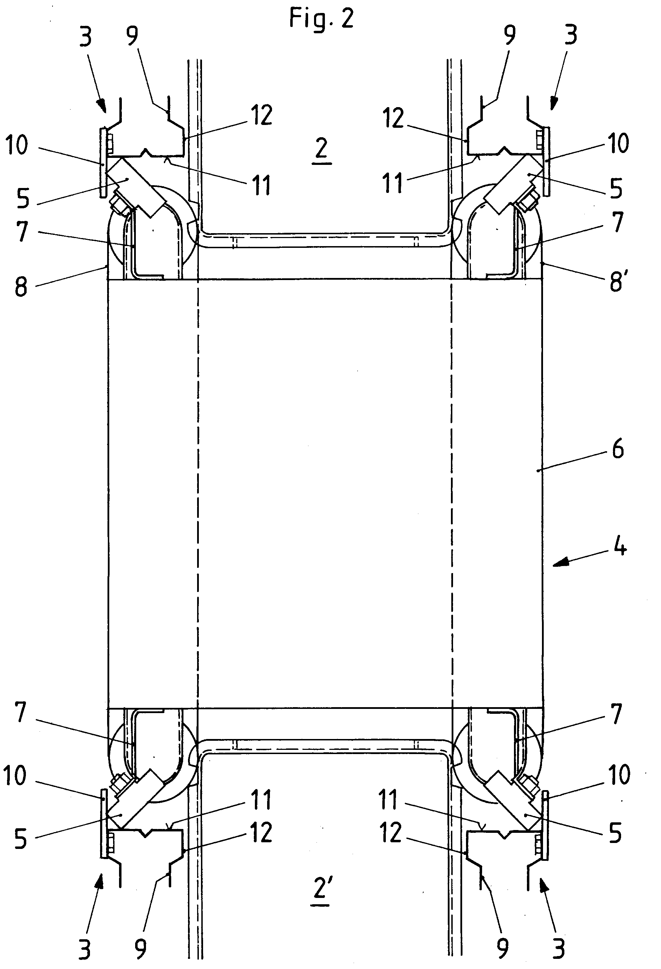

Wie Fig. 2 zeigt weist der Lift 4 eine Platte 6 auf, an der im Bereich ihrer vier Ecken je ein Winkelstück 7 befestigt ist. Am freien, abgewinkelten Ende jedes Winkelstückes 7 ist eine Rolle 5 frei drehbar gelagert. Auf der Oberseite der Platte 6 befinden sich zu gegenüberliegenden Seiten zwei mit gleicher Geschwindigkeit und entgegengesetztem Drehsinn antreibbare Endlosbänder (8, 8') mit einem nicht dargestellten Umkehrantrieb. Sie befördern einen dazwischen befindlichen und auf der Platte 6 stehenden rechteckigen Behälter auf einen Lagerplatz 2, wenn die Platte mit diesem koplanar ausgerichtet ist oder entnehmen einen solchen Behälter aus einem besetzten Lagerplatz 2, 2'.

Bei diesem Ausführungsbeispiel weisen die Regalstützen 3 im wesentlichen eine U-Profilstange 9 und eine damit verschraubte Flachprofilstange 10 auf. Die U-Profilstange 9 bildet mit ihrem Quersteg eine Führungs- oder Lauffläche 11, wobei die Schenkel unter sich parallele Abschnitte 12 aufweisen, an denen anliegend weitere U- oder Flachprofilstangen 9 bzw. 10 befestigbar sind.

Am äusseren Abschnitt 12 jeder U-Profilstange ist eine Flachprofilstange 10 mittels Schrauben oder dgl. befestigt, welche mit der Lauffläche 11 winkelförmige Führungen für die Rollen 5 bzw. die Vertikalverschiebung des Lifts 4 bilden und die eine horizontale Verschiebung des Liftes 4 verhindern. Die U-Profilstangen 9 sind für das Anbringen von Schraubverbindungen oder dgl. mit in einem bestimmten Rastermass beabstandeten Durchbrechungen versehen. Das gleiche gilt auch für die Flachprofilstangen 10, welche entsprechende Durchbrechungen 13 aufweisen. Die Flachprofilstangen 10 sind zudem an den über die Führungsflächen 11 vorstehenden Längsseiten mit Ausnehmungen 14 versehen, die mit Bezug auf die Lagerplätze 2, 2' eine definierte Lage einnehmen und die als Marken für einen am Lift 4 angeordneten, nicht dargestellten Detektor dienen. Der Detektor ist mit dem vertikalen Liftantrieb gekoppelt und stoppt diesen, wenn die betreffende Marke das Erreichen eines bestimmten Lagerplatzes 2, 2' für einen Materialumschlag signalisiert.

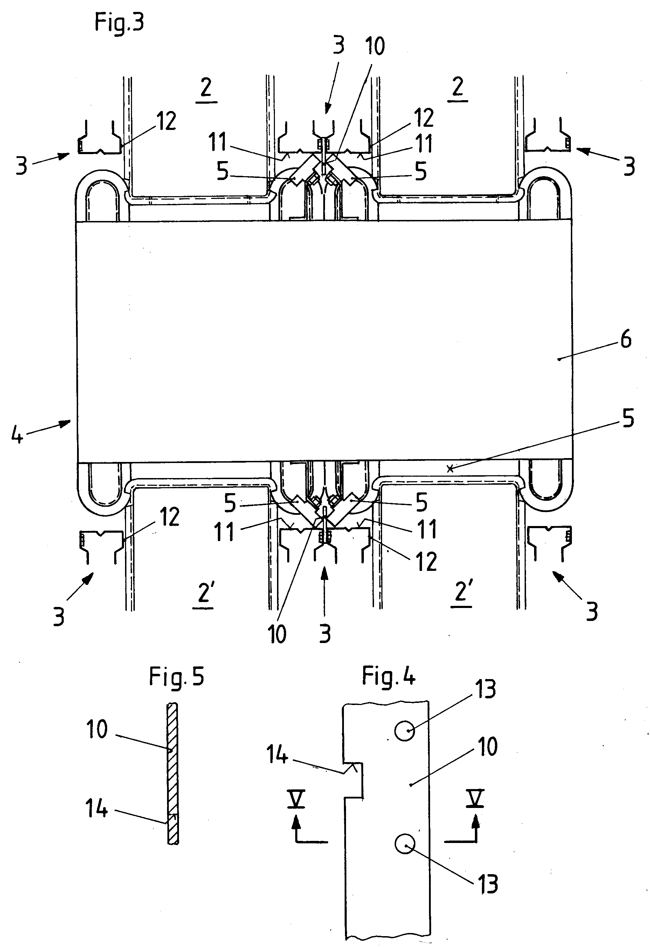

Beim Ausführungsbeispiel nach Fig. 3 sind zu gegenüberliegenden Seiten des für den Lift 4 vorgesehenen Zwischenraumes 15 je zwei miteinander fest verbundene vertikale Reihen 1, 1' für Lagerplätze 2, 2' angeordnet. Hierbei sind die äussersten Regalstützen 3 je durch eine U-Profilstange 9 gebildet. Die mittleren Regalstützen 3 dagegen bestehen aus zwei U-Profilstangen 9, bei denen zwischen den einander zugewandten Abschnitten 12 der Schenkel eine Flachprofilstange 10 (vorzugsweise durch eine Schraubverbindung) befestigt ist. Bei diesen Regalstützen 3 bildet die Flachprofilstange 10 mit den angrenzenden Laufflächen 11 vier winkelförmige Führungen, in denen die Rollen 5 ablaufen.

Bei diesem Beispiel ist der Lift 4 mit zwei Aufnahmeplätzen für je einen Behälter versehen. Jeder Aufnahmeplatz ist mit zwei Endlosbändern (8, 8') als Beschickungs- und Entnahmeeinrichtung versehen und je einem Reihenpaar (1, 1') zugeordnet.

Die Drehachsen der Rollen 5 sind, wie schon beim ersten Ausführungsbeispiel, vorzugsweise zu den Laufflächen 11 schräg gestellt, so dass sie sowohl auf den Laufflächen 11 als auch auf den Flachprofilstangen 10 abrollen. Beim Beispiel nach Fig. 3 sind sie nicht an den Ecken der Platte 6 sonder in deren Längsmitte mittels den Winkelstücken 7 angebracht. Auch bei dieser Ausführungsform ist in vertikaler Richtung eine Führung erreicht bei gleichzeitiger Sicherung gegen eine horizontale Verschiebung des Liftes 4.

Alle Ausführungsbeispiele zeigen, dass die Regalstützen 3 aus handelsüblichen Profilstrangen 9, 10 herstellbar sind. Sie bestehen entweder nur aus U-Profilstangen oder aus einer U-Profilstange 9 und einer Flachprofilstange 10, welche auch durch Profilstangen mit L- oder T-Profil ersetzt werden können.

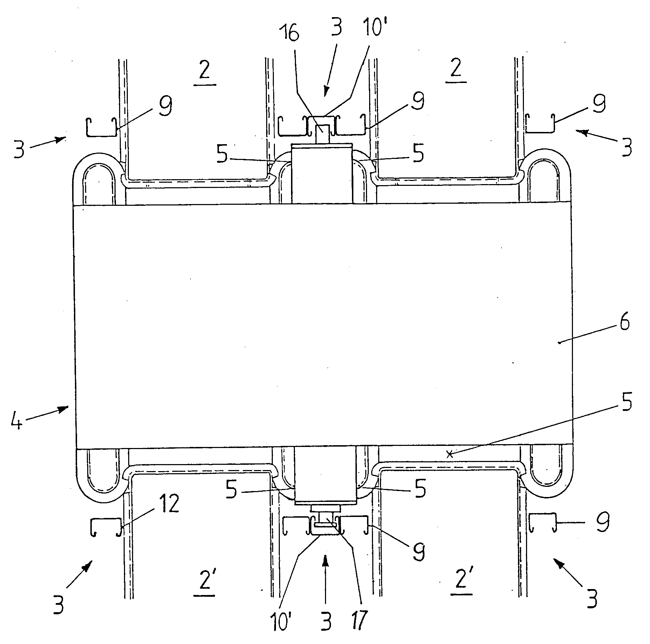

Beim Ausführungsbeispiel nach Fig. 6 bezeichnen gleiche Hinweisziffern gleiche Teile wie bei den vorangehenden Beispielen. Hier ist bei der mittleren Regalstütze 3 anstelle der Flachprofilstange 10 eine gegen den Lift 4 offene U-Profilstange 10' als Führung für den Lift 4 zwischen die seitlich angrenzenden U-Profilstangen 9 eingeschraubt. Die U-Profilstange 10' kann genau den gleichen Querschnitt haben wie die angrenzenden Profilstangen 9. Sie kann aber auch breiter oder tiefer sein als jene. Bei diesem Ausführungsbeispiel sind am Lift 4 zu gegenüberliegenden Seiten Führungsrollen 16, 17, drehbar gelagert, die in die U-Profilstange 10' hineingreifen. Dabei ist die Führungsrolle 17 mit einem Doppelspurkranz versehen, der die umgebogenen Schenkelenden der U-Profilstange 10' umgreift und eine Querbewegung des Liftes 4 verhindert.

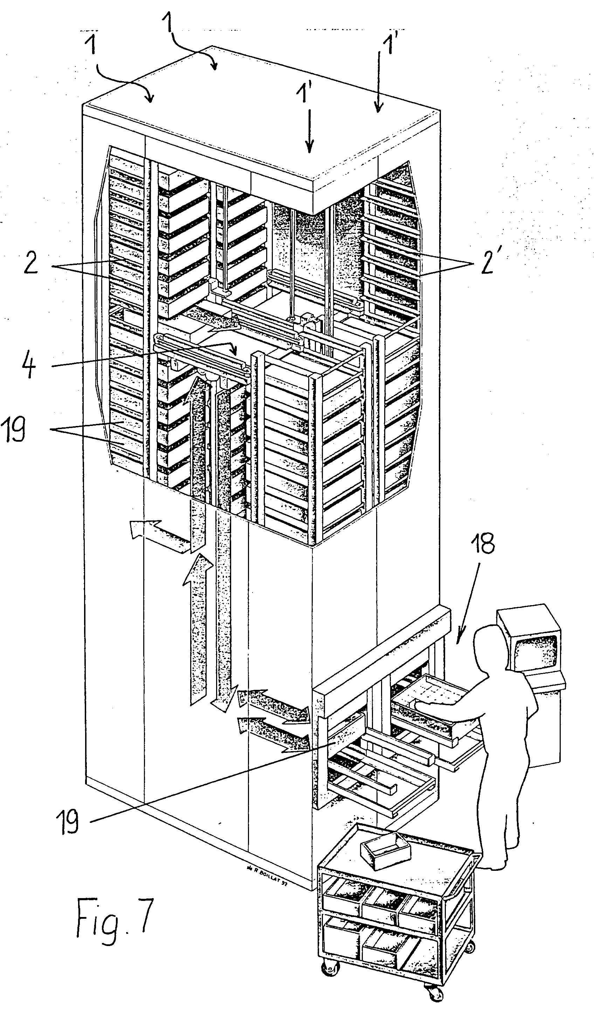

Wie Fig. 7 zeigt können zwei Reihen 1 und zwei Reihen 1' einander spiegelbildlich gegenüberliegend zu einer Baueinheit verbunden sein. Diese Baueinheit umfasst auch den Lift 4 mit seinen Antriebsorganen, welche, wie anhand der Fig. 3 und 6 beschrieben, an den Regalstützen 3 geführt ist. Von zwei einander gegenüberliegenden Reihen 1 bzw. 1' einer Baueinheit hat je mindestens eine auf einer dem Lift 4 abgewandten Seite eine Beschickungs- und Entnahmestation 18, wo die mit Kleinteilen beladenen, und in den Lagerplätzen 2 abgestellten bzw. abzustellenden Behälter 19 entnommen bzw. zur Einlagerung eingegeben werden können. Erstreckt sich eine solche Baueinheit über mehrere Etagen eines Gebäudes, so können vertikal übereinander, entsprechend der Anzahl Stockwerke, mehrere Beschickungs- und Entnahmestationen 18 vorgesehen sein.

## Patentansprüche

1. Behälterlager mit mindestens einem Paar von sich mit Abstand spiegelsymmetrisch gegenüberliegenden, vertikalen und mit Lagerplätzen (2, 2') versehenen Reihen (1, 1') welche Reihen (1, 1') an ihren vier Ecken durch Regalstützen (3) begrenzt sind, dadurch gekennzeichnet, dass im Zwischenraum zwischen den Reihen (1, 1') ein vertikal verfahrbarer Lift (4) mit einer Beschickungs- und Entnahmeeinrichtung (8) vorhanden und wenigstens an zwei zu gegenüberliegenden Seiten des Zwischenraumes befindlichen Regalstützen (3) geführt ist.

2. Behälterlager nach Anspruch 1, dadurch gekennzeichnet, dass zwei Reihenpaare (1, 1') zu einer Baueinheit verbunden sind, denen im Zwischenraum ein gemeinsamer Lift (4) mit zwei je einem Reihenpaar (1, 1') zugeordneten Aufnahmeplätzen, welche je mit einer Beschickungs- und Entnahmeeinrichtung (8) versehen sind.

3. Behälterlager nach Anspruch 1 oder 2, dadurch gekennzeichnet, dass wenigstens eine Reihe jeden Reihenpaares (1, 1') auf einer dem Zwischenraum abgewandten Seite mindestens eine Beschickungs- und Entnahmestation (8) aufweist.

4. Bauteilsatz zur Herstellung von Regalstützen (3) insbesondere für ein Behälterlager nach Anspruch 1, welcher U-Profilstangen (9) aufweist, deren Schenkel aussenseitig für ein paarweises Verbinden mit parallelen Flächen (12) versehen sind, dadurch gekennzeichnet, dass zusätzlich an den Flächen (12) der U-Profilstangen (9) längsparallel befestigbare L-, U-, T- oder Flachprofilstangen (10) vorhanden sind, derart, dass eine an einer U-Profilstange (9) befestigte Profilstange (10) mindestens Teil einer vertikalen Liftführung bildet.

5. Bauteilsatz nach Anspruch 4, dadurch gekennzeichnet, dass alle Profilstangen (9, 10) zwecks gegenseitiger Verschraubung mit rasterhaltigen Durchbrechungen versehen sind.

6. Bauteilsatz nach Anspruch 4 oder 5, dadurch gekennzeichnet, dass die L-, U-, T-, oder Flachprofilstangen (10) in Längsrichtung mit von einem Sensor feststellbaren Markierungen (14) versehen sind, deren Abstand dem vertikalen Abstand der Regalplätze (2, 2') im zusammengebauten Regallager entspricht.

7. Bauteilsatz nach Anspruch 4, dadurch gekennzeichnet, dass die Markierung (14) durch Durchbrechungen oder Ausnehmungen gebildet sind.
